# FASCICULE DE BREVET EUROPEEN

(11) **EP 3 456 226 B1**
(45) Date de publication et mention de la délivrance du brevet: **22.01.2020**
(21) Numéro de dépôt: 18193924.0
(22) Date de dépôt: 12.09.2018
(51) Int. Cl.: A47J 45/06, A47J 36/16, A47J 36/18, A47J 36/20, A47J 43/046

(54) **ENSEMBLE DE PRÉPARATION ET/OU DE CUISSON D'ALIMENTS POUR ROBOT MÉNAGER DE CUISINE**
ANORDNUNG ZUR ZUBEREITUNG UND/ODER ZUM KOCHEN VON LEBENSMITTELN FÜR HAUSHALTSKÜCHENROBOTER
ASSEMBLY FOR THE PREPARATION AND/OR COOKING OF FOOD FOR KITCHEN ROBOT

(30) Priorité: 13.09.2017 FR 1758505
(43) Date de publication de la demande: 20.03.2019
(73) Titulaire: BEABA, 75001 Paris (FR)
(72) Inventeur: NOCA, Laurent, 26390 HAUTERIVES (FR); BOUHOURS, Rodolphe, 01460 PORT (FR)
(74) Mandataire: Chevalier, Renaud Philippe

(56) Documents cités:
- EP-A1- 1 736 083
- WO-A1-2010/133047
- WO-A1-2018/050975
- WO-A2-2007/088283
- US-A- 4 917 262
- US-A1- 2013 025 470

## Description

La présente invention concerne le domaine du petit électroménager destiné au réchauffement de récipients alimentaires et/ou à la cuisson d'aliments et/ou à la préparation d'aliments. Préférentiellement, l'invention s'applique au domaine du petit électroménager de puériculture mais de manière non-exclusive.

Il existe de nombreux appareils de petit électroménager dédiés notamment à la préparation des aliments et à leur cuisson à la vapeur ou non au sein d'un même bol.

Pour la cuisson à la vapeur, on utilise généralement un panier de cuisson dont le fond est ajouré et permet le passage de la vapeur. Le panier de cuisson est positionné dans le bol de préparation dans lequel on verse une quantité d'eau déterminée destinée à s'évaporer par chauffage du bol. Classiquement, le panier de cuisson comprend des moyens de préhension pour permettre la manipulation de ce dernier et le transvasement des aliments cuits dans le bol de préparation ou dans un autre récipient, une fois la cuisson à la vapeur terminée.

Les moyens de préhension équipant le panier de cuisson se trouvent sous différentes formes.

Il existe des paniers de cuisson équipés d'organes de préhensions configurés pour être contenus dans l'espace de cuisson lorsque le panier est positionné dans le bol de l'appareil soit par la géométrie même des organes de préhension soit grâce à des éléments de charnières permettant de plier les organes de préhension. L'inconvénient majeur de ces organes de préhension est qu'ils sont présents dans l'espace de cuisson pendant la cuisson et se trouvent donc également réchauffés par la vapeur. Ainsi, même si ces organes sont revêtus d'une couche protectrice non conductrice ces derniers sont difficilement manipulables car très chauds, ce qui complique le transvasement des aliments et prennent de l'espace sur le volume de cuisson.

Certains modèles d'appareil sont équipés d'un accessoire externe pour coopérer avec des zones d'accroche intégrées au panier de cuisson. Ainsi, après la cuisson, l'accessoire externe est inséré ou clippé sur les zones d'accroche du panier, ce qui permet de retirer le panier de cuisson sans risque de brûlures. Cependant, la coopération de l'accessoire externe avec les zones d'accroche n'est pas évidente et la qualité de la liaison entre les zones d'accroches et l'accessoire externe ne rend pas aisé la manipulation du panier de cuisson. Par ailleurs, il est nécessaire de ranger à proximité l'accessoire externe dédié à la manipulation du panier après cuisson.

Certains autres modèles sont conçus avec un panier de cuisson comprenant une poignée fixe et externe au bol sortant via un évidement dans la partie supérieure du bol. Cette configuration est très avantageuse car pendant la cuisson et après la cuisson la poignée reste froide et le panier est facilement manipulable après cuisson. Cependant, Cette configuration présente également un important inconvénient puisque lorsque le panier est dans le bol l'évidement ménagé dans la partie supérieure du bol est comblé de manière plus ou moins étanche par la poignée dudit panier mais lorsque le panier n'est pas dans le bol, l'évidement n'est pas comblé, ce qui implique que pour la préparation des aliments, par exemple le mixage ou pour la cuisson d'aliments sans le panier, il existe un risque de fuite d'aliments par projection ou de vapeur, rendant la cuisson peu efficace et longue. WO2007/088283 divulgue également un ensemble de préparation et/ou de cuisson d'aliments pour robot ménager de cuisine.

Dans la présente invention, on entendra par les termes « élément fixe », un élément rapporté ou non et non-amovible.

L'invention a pour but de remédier à tout ou partie des inconvénients précités et notamment à permettre une manipulation aisée du panier de cuisson après cuisson, tout en conservant une étanchéité du bol même quand le bol n'est pas équipé de panier de cuisson.

À cet effet, l'invention a pour objet un ensemble de préparation et/ou de cuisson d'aliments pour robot ménager de cuisine selon la revendication 1.

Grâce à l'invention, l'organe de préhension du panier est aisément manipulable et permet le transvasement d'aliments du panier de cuisson dans le bol sans risque de brûlure et de manière simple. En effet, l'organe de préhension est positionné hors des volumes internes de cuisson (premier et deuxième), ce qui permet d'éviter que la vapeur de cuisson ne réchauffe l'organe de préhension et cet avantage est renforcé par le fait que lorsque l'organe de préhension du panier est logé dans le logement, le logement est isolé des volumes internes de cuisson (premier et deuxième), de sorte que la vapeur ne s'insinue pas dans le logement lors de la cuisson et lorsque le panier est en place.

Dans la présente invention, on entend par « préparation d'aliments » les étapes préalables à une cuisson des aliments comme le mixage, le mélange, la coupe, etc. Ainsi un bol de préparation et de cuisson d'aliments permet à la fois de réaliser les étapes de préparation d'aliments et cuire lesdits aliments.

Dans la présente invention, on entend par « logement isolé », un logement qui est séparé des premier et deuxième volumes internes de manière totalement étanche ou partiellement étanche.

Dans la présente invention, on entend par « partiellement étanche », une étanchéité relative de sorte qu'une infime partie de la vapeur (négligeable) peut s'introduire dans le logement sans pour autant réchauffer significativement l'organe de préhension de façon à le rendre insaisissable pour cause de risque de brûlure ou d'inconfort.

Dans la présente invention, on entend par « première configuration de l'ensemble », une configuration dans laquelle le panier est positionné dans le premier volume interne du bol, quelle que soit la position du couvercle (ouvert ou fermé).

Dans la présente invention, on entend par « deuxième configuration de l'ensemble », une configuration dans laquelle le panier est en dehors du premier volume interne, quelle que soit la position du couvercle (ouvert ou fermé).

Dans la présente invention, le couvercle est conformé pour fermer le premier volume interne de manière étanche dans la deuxième configuration de l'ensemble.

Dans la présente invention, le logement coopère par complémentarité de forme avec l'organe de préhension du panier.

Selon une forme de réalisation de l'invention, le logement comprend une première partie ménagée sur la poignée du bol, et une deuxième partie ménagée sur la première portion du couvercle.

Préférentiellement, la première portion du couvercle peut être un élément de préhension constituant au moins partiellement la deuxième partie du logement.

Dans la présente invention, le bol comprend un évidement ménagé sur la paroi latérale du bol.

Selon une forme de réalisation de l'invention, l'évidement forme une encoche sur le bord supérieur de la paroi latérale du bol.

Dans la présente invention, l'évidement comprend une première section s'étendant au niveau de la poignée du bol, et une deuxième section s'étendant au-delà de la poignée du bol. Avantageusement, la deuxième section de l'évidement s'étend au-delà la poignée en sens antihoraire par rapport au bol. Avantageusement, la première section et la deuxième section sont adjacente.

Dans la présente invention, l'évidement est configuré pour délimiter le débattement angulaire de la rotation du panier dans le bol. En effet, lorsque l'organe de préhension du panier est en regard de la poignée du bol, dans la première section du bol, l'organe de préhension est uniquement déplaçable par glissement et lorsque l'organe de préhension du panier est dans la deuxième section du bol, l'organe de préhension est saisissable et permet de retirer le panier de cuisson du bol.

Ainsi, selon une forme de réalisation de l'invention, la largeur de la première section de l'évidement correspond à la largeur de l'organe de préhension du panier et préférentiellement correspond également à la largeur de la poignée du bol.

Selon une forme de réalisation de l'invention, la largeur de la deuxième section de l'évidement est également ou sensiblement supérieure à la largeur de l'organe de préhension du panier.

Selon une forme de réalisation de l'invention, dans la première configuration de l'ensemble, la première section de l'évidement est comblée au moins en partie par l'organe de préhension du panier. Préférentiellement, dans la première configuration de l'ensemble, la première section de l'évidement est entièrement comblée par l'organe de préhension du panier.

Selon une forme de réalisation de l'invention, dans la deuxième configuration de l'ensemble, la première section de l'évidement est fermée de manière étanche par la première portion du couvercle. Dans la deuxième configuration de l'ensemble, la vapeur en cours de cuisson peut monter jusque dans le logement destiné à loger l'organe de préhension mais ne peut en sortir grâce à la première portion du couvercle qui ferme ledit logement. Ainsi, même quand le panier est absent de l'ensemble, la cuisson est efficace et l'ensemble reste étanche sans risque de brulure ou de projection d'aliments.

Selon une forme de réalisation de l'invention, le couvercle comprend une deuxième portion sur laquelle est ménagé un clapet de fermeture destiné à fermer une partie de l'évidement et préférentiellement la deuxième section de l'évidement.

Selon une forme de réalisation de l'invention, dans la première configuration de l'ensemble et/ou dans la deuxième configuration de l'ensemble, la deuxième section de l'évidement est fermée de manière sensiblement étanche par le clapet de fermeture.

Dans la présente invention, on entend par « sensiblement étanche » une fermeture qui peut être totalement étanche, dite hermétique, ou une fermeture laissant passer une quantité négligeable de fluide.

Selon une forme de réalisation de l'invention, la deuxième portion du couvercle est agencée de manière adjacente à la première portion du couvercle.

Selon une forme de réalisation de l'invention, la poignée du bol comprend une portion de liaison avec le bol et une portion de préhension, la première partie du logement étant ménagée sur une portion aménagée de la portion de liaison de la poignée.

Selon une forme de réalisation de l'invention, la portion aménagée comprend une butée configurée pour délimiter au moins partiellement le logement de l'organe de préhension. Avantageusement, la butée permet également de limiter le déplacement en rotation du panier dans le bol autour d'un axe longitudinal X-X de l'ensemble.

Selon une forme de réalisation de l'invention, le logement de l'organe de préhension est délimité en partie supérieure par la première portion du couvercle, en partie inférieure par une portion aménagée de la poignée du bol, latéralement par une butée ménagée sur la portion aménagée de la poignée du bol et par la première portion du couvercle, en partie distale par rapport au bol par la première portion du couvercle qui ferme ledit logement par rapport à l'extérieur et en partie proximale par rapport au bol, par l'évidement ménagé sur le bol.

Selon une forme de réalisation de l'invention, le bol est de forme globalement cylindrique.

Selon une forme de réalisation de l'invention, le couvercle est de forme globalement cylindrique.

Avantageusement, la cylindricité du bol et la cylindricité du couvercle correspondent de manière à former un ensemble esthétique et compact.

Selon une forme de réalisation de l'invention, le bol comprend un fond sur lequel est monté un arbre d'entrainement rotatif destiné à recevoir au moins un élément de coupe et/ou de mélange.

Selon une forme de réalisation de l'invention, le bol comprend un bec verseur.

Selon une forme de réalisation de l'invention, la poignée du bol comprend en outre un élément de verrouillage configuré pour coopérer avec un élément de verrouillage complémentaire ménagé sur le couvercle.

Selon une forme de réalisation de l'invention, l'élément de verrouillage est un orifice conformé pour coopérer avec l'élément de verrouillage complémentaire par complémentarité de forme.

Selon une forme de réalisation de l'invention, la poignée du bol est fixe.

Selon une forme de réalisation de l'invention, la poignée du bol est une pièce rapportée sur le bol.

Selon une forme de réalisation de l'invention, la poignée du bol peut comprendre une ou des zones présentant un revêtement isolant et/ou un grip.

Selon une forme de réalisation de l'invention, la poignée du bol est en plastique, par exemple en polypropylène (PP) ou en acrylonitrile butadiène styrène (ABS).

Selon une forme de réalisation de l'invention, le couvercle comprend au moins une troisième portion sur laquelle est ménagée une languette de fermeture destinée à fermer le bec verseur du bol.

Selon une forme de réalisation de l'invention, le couvercle se ferme par rotation en sens horaire. Avantageusement, lorsque l'on positionne le couvercle sur le bol contenant le panier et que l'on tourne en sens horaire le couvercle, la première portion du couvercle guide l'organe de préhension du panier dans la première partie du logement afin de combler la première section de l'évidement et le clapet de fermeture ménagé sur la deuxième portion du couvercle vient fermer de manière étanche la deuxième section de l'évidement.

Selon une forme de réalisation de l'invention, le couvercle comprend en outre un élément de verrouillage complémentaire configuré pour coopérer avec un élément de verrouillage ménagé sur la poignée du bol.

Selon une forme de réalisation de l'invention, l'élément de verrouillage complémentaire est un ergot saillant s'étendant de manière tangentielle au couvercle et agencé préférentiellement sur une partie de la première portion du couvercle.

Selon une forme de réalisation de l'invention, le couvercle comprend un évidement interne destiné à être positionné en regard de l'évidement ménagé sur le bol, lorsque le couvercle ferme le premier volume interne.

Selon une forme de réalisation de l'invention, l'évidement interne est ménagé sur le dessous du couvercle destiné à être en contact avec le bol.

Selon une forme de réalisation de l'invention, l'évidement interne est configuré pour délimiter un débattement angulaire d'une patte saillante ménagée sur le panier.

Selon une forme de réalisation de l'invention, le panier présente une forme globalement cylindrique.

Selon une forme de réalisation de l'invention, la paroi latérale et le fond du panier forment une cuve.

Selon une forme de réalisation de l'invention, la cuve peut être en acier inoxydable ou en plastique, par exemple en polypropylène (PP) ou en verre.

Selon une forme de réalisation de l'invention, l'organe de préhension peut être une languette ou une poignée.

Selon une forme de réalisation de l'invention, le panier comprend en outre, une patte saillante ménagée sensiblement regard de l'organe de préhension.

Avantageusement, le panier est maintenu en suspension dans le premier volume interne du bol uniquement par deux appuis, le premier appui correspondant à l'organe de préhension et le deuxième appui correspondant à la patte saillante. Cette configuration permet de s'affranchir d'une nervure circonférentielle ménagée sur le bord supérieur du panier coopérant avec le bord supérieur du bol.

En variante, le panier comprend une nervure circonférentielle configurée pour être en appui sur le bord supérieur du bol, afin de maintenir en suspension le panier dans le volume interne.

Selon une forme de réalisation de l'invention, l'organe de préhension est fixe.

Selon une forme de réalisation de l'invention, l'organe de préhension s'étend radialement par rapport à la paroi latérale du panier.

Selon une forme de réalisation de l'invention, l'organe de préhension est surmoulé sur la paroi latérale.

Selon une forme de réalisation de l'invention, l'organe de préhension est surmoulé sur le bord supérieur de la paroi latérale.

Selon une forme de réalisation de l'invention, l'organe de préhension et une ceinture couvrant la circonférence du bord supérieur de la paroi latérale sont surmoulés.

Selon une forme de réalisation de l'invention, l'organe de préhension et/ou la ceinture est réalisé en plastique, par exemple en polypropylène (PP) ou en élastomère.

Selon une forme de réalisation de l'invention, l'ensemble de préparation et/ou de cuisson d'aliments pour robot ménager de cuisine comprend, au moins dans une deuxième configuration :
- un bol de préparation et/ou de cuisson d'aliments comportant au moins un fond, au moins une paroi latérale s'étendant depuis le fond dans une direction sensiblement sécante, la paroi latérale et le fond délimitant un premier volume interne de cuisson et/ou de préparation, le bol comprenant en outre au moins une poignée s'étendant à l'extérieur du premier volume interne,
- un couvercle conformé pour fermer le premier volume interne, caractérisé en ce que l'ensemble comprend un logement destiné à loger au moins partiellement un organe de préhension d'un panier de cuisson dans une première configuration selon l'invention, ledit logement étant agencé hors du premier volume interne et fermé par une première portion de couvercle de manière sensiblement étanche.

Selon une forme de réalisation de l'invention, dans la deuxième configuration de l'ensemble, la première section de l'évidement est fermée de manière étanche par la première portion du couvercle. Dans la deuxième configuration de l'ensemble, la vapeur en cours de cuisson peut monter jusque dans le logement destiné à loger l'organe de préhension mais ne peut en sortir grâce à la première portion du couvercle qui ferme ledit logement. Ainsi, même quand le panier est absent de l'ensemble, la cuisson est efficace et l'ensemble reste étanche sans risque de brulure ou de projection d'aliments.

L'invention sera mieux comprise, grâce à la description ci-après, qui se rapporte à des modes de réalisation selon la présente invention, donnés à titre d'exemples non limitatifs et expliqués avec référence aux figures schématiques annexées. Les figures schématiques annexées sont listées ci-dessous :
- la figure 1 est une vue en perspective de l'ensemble selon l'invention en première configuration
- la figure 2 est une vue en perspective de l'ensemble selon l'invention en deuxième configuration,
- la figure 3 est une vue en coupe de l'ensemble représenté en figure 1,
- la figure 4 est une vue éclatée en perspective selon un premier angle de vue,
- la figure 5 est une vue éclatée en perspective selon un deuxième angle de vue,
- la figure 6 est une vue en perspective du panier selon un premier mode de réalisation de l'ensemble selon l'invention,
- la figure 7 est une vue en perspective du bol selon le premier mode de réalisation de l'ensemble selon l'invention,
- la figure 8 est une vue de détail de l'évidement du bol selon l'invention,
- la figure 9 est une vue en perspective du dessus du couvercle selon l'invention,
- la figure 10 est une vue en perspective du dessous du couvercle selon l'invention,
- la figure 11 est une vue en perspective du bol et du panier selon l'invention,
- la figure 12 est une vue de dessus de la figure 11,
- la figure 13 est une vue en perspective de l'ensemble en première configuration selon l'invention,
- la figure 14 est une vue de dessus de la figure 13.

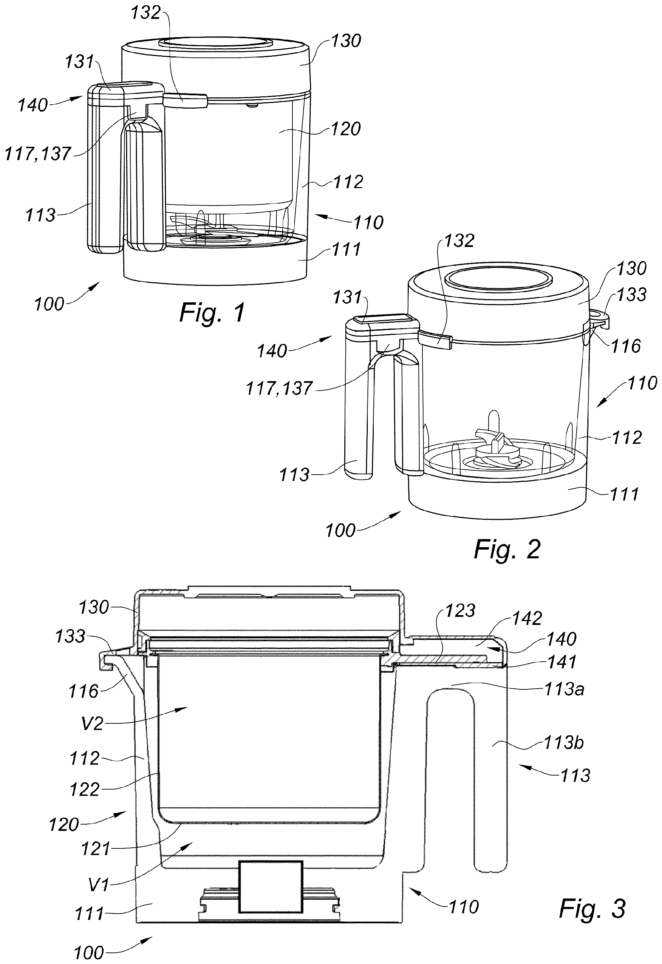

En se référant notamment aux figures 1 à 3, l'ensemble 100 de préparation et/ou de cuisson d'aliments pour robot ménager de cuisine selon l'invention comprend un bol 110 de préparation et/ou de cuisson d'aliments, un panier de cuisson 120, un couvercle 130. Dans une première configuration de l'ensemble 100 représentée aux figures 1 et 3 notamment, le panier 120 est positionné dans le bol 110. Dans une deuxième configuration de l'ensemble 100 représentée en figure 2, le panier 120 est hors du bol 110 et donc non représenté. Avantageusement, le bol 110 est de forme globalement cylindrique.

Comme illustré aux figures 1, 2, 4, 5, 7, le bol 110 comporte au moins au moins un fond 111, au moins une paroi latérale 112 s'étendant depuis le fond 111 dans une direction sensiblement sécante au fond 111, la paroi latérale 112 et le fond 111 délimitant un premier volume interne V1 de cuisson et/ou de préparation. Le bol 110 comprend en outre une poignée 113, fixe, s'étendant à l'extérieur du premier volume interne V1. Dans le fond 111, est monté un arbre d'entrainement 114 rotatif destiné à recevoir au moins un élément de coupe et/ou de mélange 115. En outre, le bol 110 comprend un bec verseur 116.

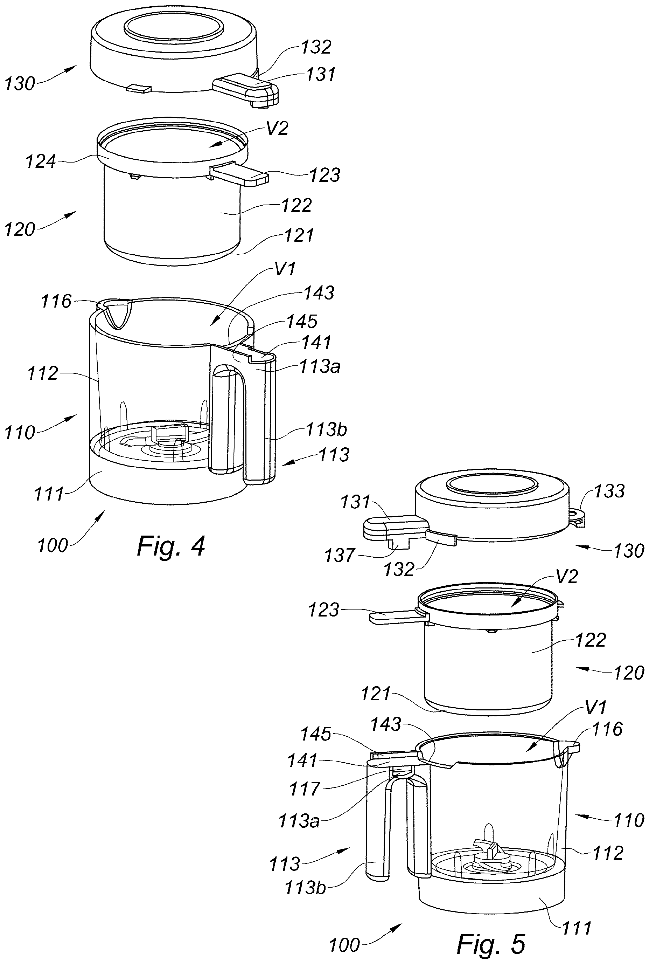

Comme on peut le voir notamment aux figures 4 et 6 à 8, la poignée 113 du bol comprend une portion de liaison 113a avec le bol 110 et une portion de préhension 113b. La portion de liaison 113a s'étend dans un plan sensiblement sécant et sensiblement perpendiculaire par rapport à l'axe longitudinal dans selon lequel la paroi latérale 112 s'étend. La portion de préhension 113b s'étendant dans un plan sensiblement sécant et préférentiellement perpendiculaire au plan dans lequel s'étend la portion de liaison 113a et sensiblement tangentiel à la paroi latérale 112. La poignée 113 du bol comprend en outre un élément de verrouillage 117 configuré pour coopérer avec un élément de verrouillage complémentaire 137 ménagé sur le couvercle 130. Dans l'exemple illustré, l'élément de verrouillage 117 est un orifice conformé pour coopérer avec l'élément de verrouillage complémentaire 137 par complémentarité de forme.

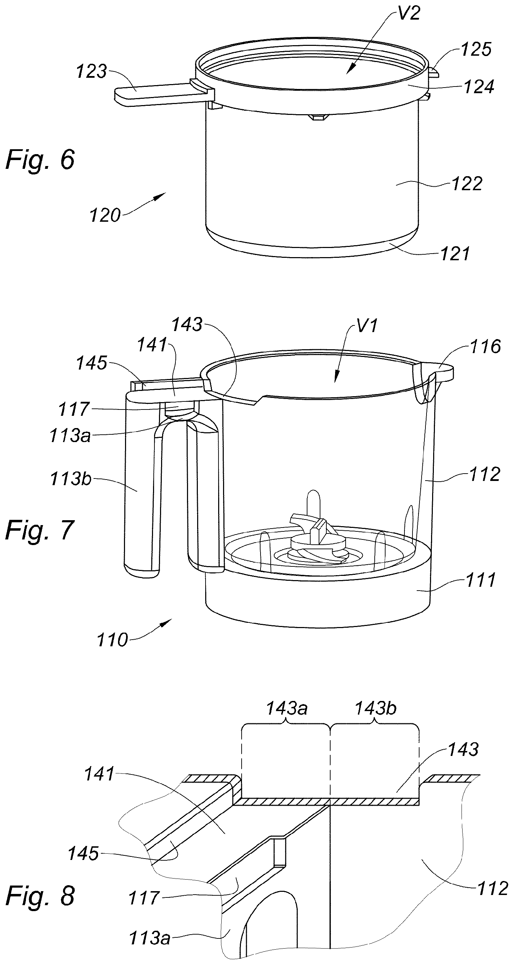

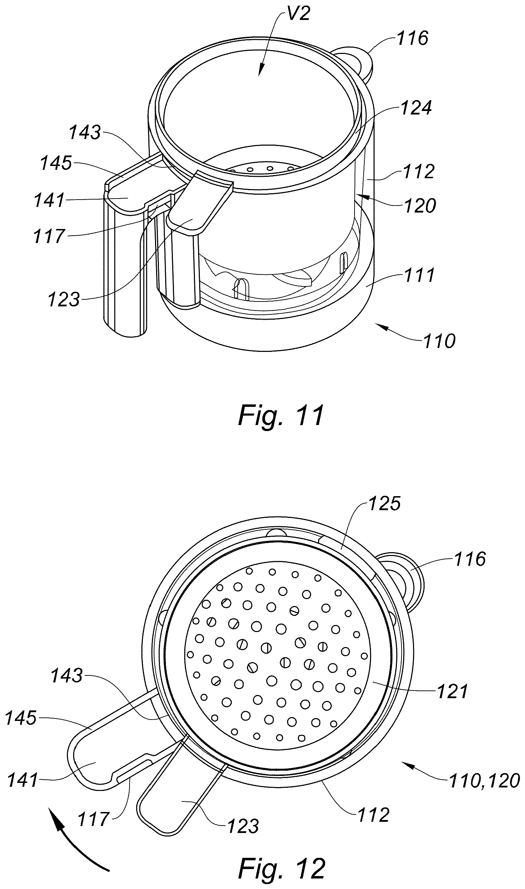

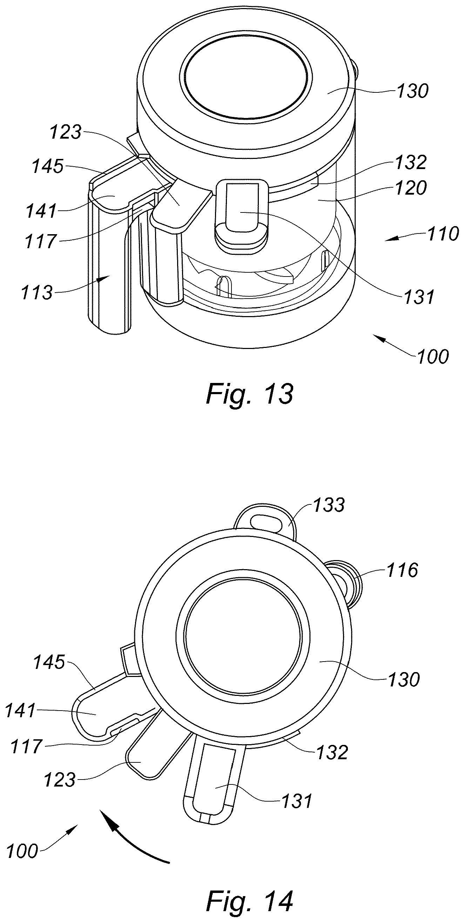

Comme illustré notamment aux figures 1, 2, 4 à 6, le panier de cuisson 120 comprend un fond ajouré 121 et au moins une paroi latérale 122 délimitant avec le fond ajouré 121 un deuxième volume interne V2 de cuisson. En outre, le panier 120 comprend au moins un organe de préhension 123 fixe. Avantageusement, le panier 120 présente une forme globalement cylindrique. Selon l'invention, la paroi latérale 122 et le fond 121 du panier 120 forment une cuve. Comme illustré en figure 6 ou en figures 11 et 13, l'organe de préhension 123 peut être une languette ou une poignée.

Comme on peut le voir notamment en figure 6, l'organe de préhension 123 s'étend radialement par rapport à la paroi latérale 122 du panier 120. En outre, le panier 120 comprend une ceinture 124 couvrant la circonférence du bord supérieur de la paroi latérale 122.

Dans l'exemple illustré aux figures 1 à 6, 11 à 14, l'organe de préhension 123 est une languette. Dans une variante non représentée, l'organe de préhension 123 peut être une poignée dont la portion de préhension vient en surépaisseur de la portion de préhension 113b de la poignée 113 du bol 110 ou dans un espace ménagé sur la portion de préhension 113b de la poignée 113 du bol 110.

Comme illustré notamment en figure 6, le panier 120 comprend en outre une patte saillante 125 ménagée sensiblement regard de l'organe de préhension 123.

Comme illustré en figure 12, le panier 120 est maintenu dans le premier volume interne V1 uniquement par deux appuis, le premier appui correspondant à l'organe de préhension 123 et le deuxième appui correspondant à la patte saillante 125.

Selon l'invention, l'ensemble 100 comprend également un couvercle 130 le premier volume interne V1 de manière étanche dans la première configuration de l'ensemble 100 et la deuxième configuration de l'ensemble 100. Comme illustré en figures 1, 2, 4, 5, 9 et 10, le couvercle 130 est de forme globalement cylindrique. En outre, le couvercle comprend une première portion 131 pouvant former un élément de préhension du couvercle 130. De plus, le couvercle 130 comprend une deuxième portion formant un clapet de fermeture 132. La deuxième portion 132 du couvercle 130 est agencée de manière adjacente à la première portion 131 du couvercle 130. Enfin, le couvercle 130 comprend au moins une troisième portion 133 sur laquelle est ménagée une languette de fermeture 133 destinée à fermer le bec verseur 116 du bol 110, la languette de fermeture 133 pouvant être rabattable comme visible en figure 4. Avantageusement, le couvercle 130 se ferme par rotation en sens horaire.

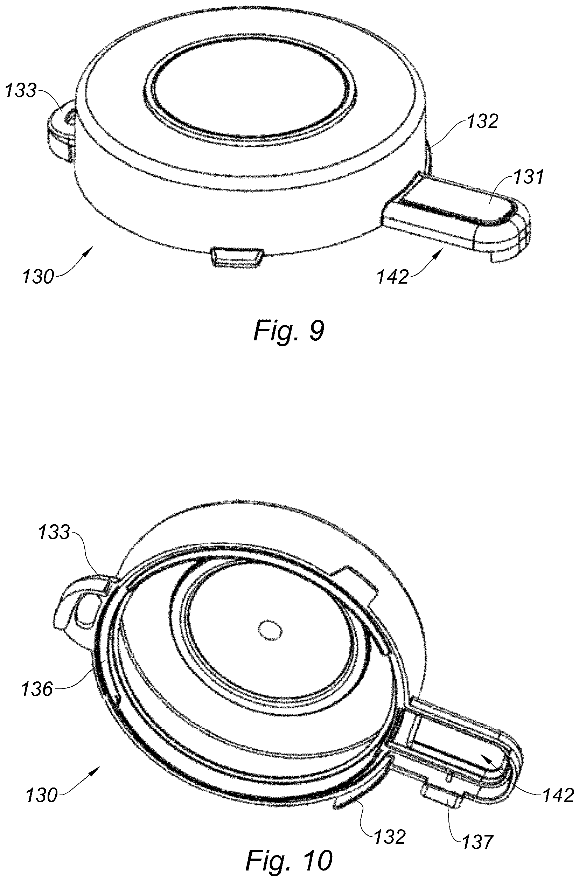

Comme visible notamment en figure 5, le couvercle 130 comprend un élément de verrouillage complémentaire 137 configuré pour coopérer avec un élément de verrouillage 117 ménagé sur la poignée 113 du bol 110. L'élément de verrouillage complémentaire 137 est un ergot saillant s'étendant de manière tangentielle au couvercle 130 et agencé préférentiellement sur une partie de la première portion 131 du couvercle 130. En outre, le couvercle 130 comprend un évidement interne 136 destiné à être positionné en regard de l'évidement 143 ménagé sur le bol 140, lorsque le couvercle 130 ferme le premier volume interne V1. L'évidement interne 136 est ménagé sur le dessous du couvercle 130 destiné à être en contact avec le bol 110 comme on peut le voir en figure 10. L'évidement interne 136 est destiné à coopérer avec la patte saillante 125 du panier 120.

Comme illustré en figure 3, l'ensemble 100 comprend un logement 140 conformé pour loger au moins partiellement l'organe de préhension 123 du panier 120 de cuisson à l'extérieur du premier volume interne V1 et du deuxième volume interne V2 dans la première configuration de l'ensemble 100 comme illustré en figure 1. Selon l'invention, le logement 140 est formé entre la poignée 113 du bol et la première portion 131 du couvercle 130 et coopère par complémentarité de forme avec l'organe de préhension 123 du panier 120.

Plus particulièrement et comme illustré aux figures 3 et 4, le logement 140 comprend une première partie 141 ménagée sur la poignée 113 du bol 110, et une deuxième partie 142 ménagée sur la première portion 131 du couvercle 130. Comme on peut le voir en figures 3, 4 et 6 à 8, la première partie 141 du logement 140 est ménagée sur la portion de liaison 113a de la poignée 113. De plus, la première partie 141 du logement 140 comprend une butée 145 configurée pour délimiter au moins partiellement le logement 140 de l'organe de préhension 123.

Le logement 140 comprend en outre un évidement 143 ménagé sur la paroi latérale 112 du bol 110 comme illustré en figure 7. Comme on peut le voir en figure 7, l'évidement 143 forme une encoche sur la partie supérieure de la paroi latérale 112 du bol 110. Comme illustré en figure 8, l'évidement 143 comprend une première section 143a s'étendant au niveau de la poignée 113 du bol 110, et une deuxième section 143b s'étendant au-delà de la poignée 113 du bol 110.

Pour fermer l'ensemble 100 selon l'invention dans la première configuration, il existe plusieurs possibilités.

La première possibilité consiste à positionner le panier 120 dans le premier volume interne V1 et de placer l'organe de préhension 123 du panier 120 dans l'évidement 143 comme illustré aux figures 11 et 12. Puis on pousse dans le sens horaire, l'organe de préhension 123 dans la première partie 141 du logement 140, contre la butée 145 et on referme avec le couvercle 130 dont le clapet de fermeture 132 vient fermer de manière étanche la deuxième section de l'évidement 143 et dont la première portion 131 vient fermer le logement 140 et l'élément de verrouillage 117 coopère avec l'élément de verrouillage complémentaire 137.

Dans une deuxième possibilité illustrée en figures 13 et 14, on place le panier 120 dans le premier volume interne V1, on recouvre par le couvercle 130 et on clôt en tournant le couvercle en sens horaire, l'organe de préhension 123 va se loger automatiquement dans la première partie 141 du logement 140 car il est poussé par la première portion 131 du couvercle 130. Le clapet ferme la deuxième section de l'évidement 143 et l'élément de verrouillage 117 coopère avec l'élément de verrouillage complémentaire 137.

Pour ouvrir l'ensemble 100 selon l'invention dans la première configuration, on pivote de couvercle 130 en sens antihoraire, de sorte que le logement 140 de l'organe de préhension 123 du panier 120 se déloge de la portion aménagée sur la portion de liaison 113a de la poignée 113 du bol 110. Puis on fait glisser l'organe de préhension 123 toujours positionné au moins partiellement dans la première section de l'évidement 143 en sens antihoraire, jusqu'à ce que l'organe de préhension 123 soit totalement ou majoritairement dans la deuxième section de l'évidement 143 et qu'il soit saisissable. En pivotant le couvercle 130, le clapet de fermeture 132 ne ferme plus la deuxième section de l'évidement 143 et l'élément de verrouillage complémentaire 137 se dégage de l'élément de verrouillage 117. Ainsi, grâce à un simple pivotement du couvercle, l'organe de préhension du panier est accessible et saisissable et notamment grâce au fait que l'organe de préhension 13, lors de la fermeture de l'ensemble, atteint butée 145 ménagée sur la portion aménagée de la portion de liaison 113a de la poignée 113 avant que l'élément de verrouillage 117 ne coopère avec l'élément de verrouillage 137. Ainsi, lors que l'on verrouille le couvercle 130 sur la poignée 113 du bol 110, l'organe de préhension 123 dans le logement 140 exerce une légère pression sur la butée 145 qui à l'ouverture permet le dégagement quasi-automatique de l'organe de préhension 123.

Dans la deuxième configuration de l'ensemble 100, la première section de l'évidement 143 est fermée de manière étanche par la première portion 131 du couvercle 130 et la deuxième section de l'évidement 143 est fermée de manière étanche par un clapet ménagé sur une deuxième portion du couvercle 130.

Bien entendu, l'invention n'est pas limitée aux modes de réalisation décrits et représentés aux figures annexées. Des modifications restent possibles, notamment du point de vue de la constitution des divers éléments ou par substitution d'équivalents techniques, sans sortir pour autant du domaine de protection de l'invention.

## Revendications

1. Ensemble (100) de préparation et/ou de cuisson d'aliments pour robot ménager de cuisine, comprenant au moins dans une deuxième configuration :
- un bol (110) de préparation et/ou de cuisson d'aliments comportant au moins un fond (111), au moins une paroi latérale (112) s'étendant depuis le fond (111) dans une direction sensiblement sécante, la paroi latérale (112) et le fond (111) délimitant un premier volume interne (V1) de cuisson et/ou de préparation, le bol comprenant en outre au moins une poignée (113) s'étendant à l'extérieur du premier volume interne (V1),
- un couvercle (130) conformé pour fermer le premier volume interne (V1),
et, comprenant au moins dans une première configuration :
- un panier (120) de cuisson conformé pour être positionné dans le premier volume interne (V1) de cuisson, le panier (120) de cuisson comprenant un fond (121) ajouré et au moins une paroi latérale (122) délimitant avec le fond (121) un deuxième volume interne (V2) de cuisson, le panier (120) comprenant au moins un organe de préhension (123),
l'ensemble comprend un logement (140) configuré pour loger au moins partiellement l'organe de préhension (123) du panier (120), ledit logement (140) étant agencé hors du premier volume interne (V1) et hors du deuxième volume interne (V2), et en ce que ledit logement (140) est isolé au moins partiellement du premier volume interne (V1) et deuxième volume interne (V2) de l'ensemble (100) et en ce que le bol (110) comprend un évidement (143) configuré pour délimiter le débattement angulaire de la rotation du panier (120) dans le bol (110) l'évidement (140) comprend une première section (143a) s'étendant au niveau de la poignée (113) du bol (110), l'ensemble étant **caractérisé en ce que** l'évidement comprend une deuxième section (143b) s'étendant au-delà de la poignée (113) du bol (110).

2. Ensemble selon la revendication 1, dans lequel le logement (140) comprend une première partie (141) ménagée sur la poignée (113) du bol (110), et une deuxième partie (142) ménagée sur une première portion (131) du couvercle (130).

3. Ensemble selon l'une quelconque des revendications 1 ou 2, dans lequel l'évidement (143) est ménagé sur la paroi latérale (112) du bol (110).

4. Ensemble selon les revendications 2 et 3, dans lequel la poignée (113) du bol (110) comprend une portion de liaison (113a) avec le bol (110) et une portion de préhension (113b), la première partie (141) du logement (140) étant ménagée sur une portion aménagée de la portion de liaison (113a) de la poignée (113).

5. Ensemble selon la revendication 4, dans lequel la portion aménagée comprend une butée (145) configurée pour délimiter au moins partiellement le logement (140) de l'organe de préhension (123).

6. Ensemble selon l'une quelconque des revendications précédentes, dans lequel la poignée (113) du bol (110) comprend en outre un élément de verrouillage (117) configuré pour coopérer avec un élément de verrouillage complémentaire (137) ménagé sur le couvercle (130).

7. Ensemble selon l'une quelconque des revendications 1 à 6, dans lequel le couvercle (130) comprend une deuxième portion sur laquelle est ménagé un clapet de fermeture (132) destiné à fermer une partie de l'évidement (143).

8. Ensemble selon l'une quelconque des revendications 1 à 9, dans lequel ledit logement (140) est agencé hors du premier volume interne (V1) et fermé par une première portion de couvercle de manière sensiblement étanche lorsque l'ensemble est dans la deuxième configuration.

## Patentansprüche

1. Baugruppe (100) zum Zubereiten und/oder Garen von Nahrungsmitteln für eine Küchenmaschine, die mindestens in einer zweiten Konfiguration umfasst:
- ein Gefäß (110) zum Zubereiten und/oder Garen von Nahrungsmitteln, das mindestens einen Boden (111) umfasst, wobei sich mindestens eine Seitenwand (112) von dem Boden (111) aus in einer sich im Wesentlichen schneidenden Richtung erstreckt, wobei die Seitenwand (112) und der Boden (111) ein erstes inneres Gar- und/oder Zubereitungsvolumen (V1) begrenzen, wobei das Gefäß weiter mindestens einen Griff (113) umfasst, der sich an der Außenseite des ersten Innenvolumens (V1) erstreckt,
- einen Deckel (130), der dafür ausgebildet ist, das erste Innenvolumen (V1) zu verschließen,
und die mindestens in einer ersten Konfiguration umfasst:
- einen Garkorb (120), der dafür ausgebildet ist, im ersten inneren Garvolumen (V1) positioniert zu werden, wobei der Garkorb (120) einen perforierten Boden (121) und mindestens eine Seitenwand (122) umfasst, die mit dem Boden (121) ein zweites inneres Garvolumen (V2) begrenzt, wobei der Korb (120) mindestens ein Greiforgan (123) umfasst,
die Baugruppe eine Aufnahme (140) umfasst, die dafür konfiguriert ist, das Greiforgan (123) des Korbs (120) mindestens teilweise aufzunehmen, wobei die Aufnahme (140) außerhalb des ersten Innenvolumens (V1) und außerhalb des zweiten Innenvolumens (V2) angeordnet ist, und dadurch, dass die Aufnahme (140) mindestens teilweise vom ersten Innenvolumen (V1) und zweiten Innenvolumen (V2) der Baugruppe (100) isoliert ist, und dadurch, dass das Gefäß (110) eine Ausnehmung (143) umfasst, die dafür konfiguriert ist, die Winkelauslenkung der Drehung des Korbs (120) im Gefäß (110) zu begrenzen, die Ausnehmung (140) einen ersten Abschnitt (143a) umfasst, der sich im Bereich des Griffs (113) des Gefäßes (110) erstreckt, wobei die Baugruppe **dadurch gekennzeichnet ist, dass** die Ausnehmung einen zweiten Abschnitt (143b) umfasst, der sich über den Griff (113) des Gefäßes (110) hinaus erstreckt.

2. Baugruppe nach Anspruch 1, wobei die Aufnahme (140) einen ersten Teil (141) umfasst, der am Griff (113) des Gefäßes (110) ausgestaltet ist, und einen zweiten Teil (142), der an einem ersten Stück (131) des Deckels (130) ausgestaltet ist.

3. Baugruppe nach einem der Ansprüche 1 oder 2, wobei die Ausnehmung (143) an der Seitenwand (112) des Gefäßes (110) ausgestaltet ist.

4. Baugruppe nach den Ansprüchen 2 und 3, wobei der Griff (113) des Gefäßes (110) ein Verbindungsstück (113a) mit dem Gefäß (110) und ein Greifstück (113b) umfasst, wobei der erste Teil (141) der Aufnahme (140) an einem eingerichteten Stück des Verbindungsstücks (113a) des Griffs (113) ausgestaltet ist.

5. Baugruppe nach Anspruch 4, wobei das eingerichtete Stück einen Anschlag (145) umfasst, der dafür konfiguriert ist, die Aufnahme (140) des Greiforgans (123) mindestens teilweise zu begrenzen.

6. Baugruppe nach einem der vorstehenden Ansprüche, wobei der Griff (113) des Gefäßes (110) weiter ein Verriegelungselement (117) umfasst, das dafür konfiguriert ist, mit einem komplementären Verriegelungselement (137), das am Deckel (130) ausgestaltet ist, zusammenzuwirken.

7. Baugruppe nach einem der Ansprüche 1 bis 6, wobei der Deckel (130) ein zweites Stück umfasst, an dem eine Verschlussklappe (132) ausgestaltet ist, die dazu bestimmt ist, einen Teil der Ausnehmung (143) zu verschließen.

8. Baugruppe nach einem der Ansprüche 1 bis 9, wobei die Aufnahme (140) außerhalb des ersten Innenvolumens (V1) angeordnet ist und von einem ersten Deckelstück im Wesentlichen dicht verschlossen wird, wenn sich die Baugruppe in der zweiten Konfiguration befindet.

## Claims

1. A set (100) for preparing and/or cooking foodstuffs for a kitchen food processor, comprising at least in a second configuration:
- a bowl (110) for preparing and/or cooking foodstuffs including at least one bottom (111), at least one side wall (112) extending from the bottom (111) in a substantially secant direction, the side wall (112) and the bottom (111) delimiting a first inner cooking and/or preparing volume (V1), the bowl further comprising at least one handle (113) extending outside the first inner volume (V1),
- a cap (130) shaped so as to close the first inner volume (V1),
and comprising, at least in a first configuration:
- a cooking basket (120) shaped so as to be positioned in the first inner cooking volume (V1), the cooking basket (120) comprising a perforated bottom (121) and at least one side wall (122) delimiting with the bottom (121) a second inner cooking volume (V2), the basket (120) comprising at least one gripping member (123),
the set comprises a housing (140) configured to at least partially house the gripping member (123) of the basket (120), said housing (140) being arranged out of the first inner volume (V1) and out of the second inner volume (V2), and in that said housing (140) is at least partially isolated from the first inner volume (V1) and the second inner volume (V2) of the set (100) and in that the bowl (110) comprises a recess (143) configured to delimit the angular displacement of the rotation of the basket (120) in the bowl (110), the recess (140) comprises a first section (143a) extending at the level of the handle (113) of the bowl (110), the set being **characterized in that** the recess comprises a second section (143b) extending beyond the handle (113) of the bowl (110).

2. The set according to claim 1, wherein the housing (140) comprises a first portion (141) formed on the handle (113) of the bowl (110), and a second portion (142) formed on a first portion (131) of the cap (130).

3. The set according to any one of claims 1 or 2, wherein the recess (143) is formed on the side wall (112) of the bowl (110).

4. The set according to claims 2 and 3, wherein the handle (113) of the bowl (110) comprises a connecting portion (113a) with the bowl (110) and a gripping portion (113b), the first portion (141) of the housing (140) being formed on an arranged portion of the connecting portion (113a) of the handle (113).

5. The set according to claim 4, wherein the arranged portion comprises a stop (145) configured to at least partially delimit the housing (140) from the gripping member (123).

6. The set according to any one of the preceding claims, wherein the handle (113) of the bowl (110) further comprises a locking element (117) configured to cooperate with a complementary locking element (137) formed on the cap (130).

7. The set according to any one of claims 1 to 6, wherein the cap (130) comprises a second portion on which is formed a closing flap (132) intended to close a portion of the recess (143).

8. The set according to any one of claims 1 to 9, wherein said housing (140) is arranged out of the first inner volume (V1) and closed by a first cap portion in a substantially tight manner when the set is in the second configuration.
